# EUROPEAN PATENT APPLICATION

(11) **EP 4 484 829 A1**
(43) Date of publication of application: **01.01.2025**
(21) Application number: 24182912.6
(22) Date of filing: 18.06.2024
(51) Int. Cl.: F24C 15/20

(54) **FUME EXHAUSTING DEVICE AND A METHOD FOR OPERATING A FUME EXHAUSTING DEVICE**

(30) Priority: 29.06.2023 FI 20235760
(71) Applicant: Climecon OY, 00880 Helsinki (FI)
(72) Inventor: WALLENDAHR, Ville, 00880 Helsinki (FI)
(74) Representative: Berggren Oy

(57) **Abstract**

The fume exhausting device comprises an outer casing (22), a chamber (34) for receiving fumes and/or vapours, an outlet housing (32) inside the outer casing, a first wall (36) between the outlet housing and the chamber, which first wall has at least one inlet opening (41) for conducting gas from the chamber into the outlet housing and at least one outlet opening (42) for exhausting gas from the outlet housing. The device further comprises at least one adjustable gate valve (10) configured to change the effective area of the at least one outlet opening and an at least one actuator (12) for adjusting the position of the at least one gate valve. The invention further relates to a method for operating the fume exhausting device.

## Description

### Technical Field

The invention relates to a fume exhausting device, comprising an outer casing, a chamber for receiving fumes and/or vapours, an outlet housing inside the outer casing, a first wall between the outlet housing and the chamber, which first wall has at least one inlet opening for conducting gas from the chamber into the outlet housing and at least one outlet opening for exhausting gas from the outlet housing. The invention further relates to a method for operating a fume exhausting device.

### Background Art

Commercial kitchens are furnished with fume, such as extractor hoods or ventilated ceilings, for removing fumes and vapours produced during cooking. The exhausting devices are usually installed directly above the kitchen appliances. An example of the hood extractor used in commercial kitchens is disclosed in document EP 2808613 B1.

When in operation, the fume exhausting devices remove a huge amount of air from the premises in a short period of time, which is compensated by delivering a corresponding amount of fresh outdoor air to the premises. Heating the inflowing outdoor air to the prevailing room temperature requires a lot of energy, whereby the outflow rate of the exhausting device should not be overdimensioned. On the other hand, too low outflow may allow fumes and vapours to spread around the premises. Adjusting the airflow rate is thus a difficult optimization task. Changes of the external conditions, such as change of air pressure in the premises, structural chances in the ventilation channels, airflow through the outer walls of the building and other physical phenoms causing pressure changes make the optimization task difficult.

The known fume exhausting devices, such as extractor hoods or ventilated ceilings, are provided with motorised adjusting devices, such as valves or dampers, which are installed inside the ventilation duct or channel connected the fume exhausting device. The channels and ducts are often located in cramped space above the fume exhausting device, which makes installing, maintaining and replacing the adjusting devices challenging. The adjusting devices require free operation space around them, which increases space demand and complicates designing and installing the ventilation structures. The position of the adjusting devices is steered by a control signal. A single exhausting device may be connected to a number of ventilation ducts or channel, which all must be provided by their own adjusting devices, which makes steering of the devices difficult.

An object of the invention is to provide a fume exhausting device and a method for operating the fume exhausting device, which reduces the drawbacks related to the prior art devices.

The object of the invention is achieved with a fume exhausting device and a method which are characterized in what is disclosed in the independent patent claims. Some preferred embodiments of the invention are disclosed in the dependent claims.

### Brief summary of the invention

The fume exhausting device according to the invention comprises an outer casing, a chamber for receiving fumes and/or vapours, an outlet housing inside the outer casing, a first wall between the outlet housing and the chamber, which first wall has at least one inlet opening for conducting gas from the chamber into the outlet housing and at least one outlet opening for exhausting gas from the outlet housing out of the fume exhausting device. The device further comprises at least one adjustable gate valve configured to change the effective area of the at least one outlet opening and an at least one actuator for adjusting the position of the at least one gate valve. Effective area means here the area, through which gas can flow freely from the outlet housing into the outlet opening.

A preferred embodiment of the fume exhausting device according to the invention comprises several outlet openings for exhausting gas from the outlet housing and several adjustable gate valves, each gate valve being configured to change the effective area of one outlet opening.

In another preferred embodiment of the fume exhausting device according to the invention, at least two gate valves are connected together by a coupler for simultaneously adjusting the positions of the two gate valves by using one actuator. Preferably, the coupler is a rod-like element having an adjustable length.

In another preferred embodiment of the fume exhausting device according to the invention the at least one gate valve and the at least one actuator are inside the outer casing, preferably inside the outlet housing.

In another preferred embodiment of the fume exhausting device according to the invention the at least one actuator and the at least one adjustable gate valve are connected together by a connector, such as a belt, rod or threaded rod, which is configured to transfer the force directed to or generated by the actuator to at least one gate valve for adjusting the position of the at least one gate valve in relation to at least one outlet opening. Preferably, the connector is a threaded rod, which extends through a nut attached to at least one adjustable gate valve and which threaded rod is configured to be rotated by using the actuator.

In another preferred embodiment of the fume exhausting device according to the invention, said actuator is a manually operated device, such as a lever or gear system, which has an operating organ extending into the chamber.

In another preferred embodiment of the fume exhausting device according to the invention, said actuator is an electrical motor locating inside the outlet housing and the device further comprises a control device for controlling the operation of the at least one actuator.

Another preferred embodiment of the fume exhausting device according to the invention further comprises pressure measuring means for measuring gas pressure inside the outer casing and outside the outer casing and the at least one actuator is configured to control the operation of the least one actuator based on the difference of the measured gas pressures. Preferably, the pressure measuring means comprise a first pressure sensor on the outer surface of the outer casing and a second pressure sensor inside the chamber or inside the outlet housing.

Another preferred embodiment of the fume exhausting device according to the invention further comprises at least one proximity switch for sensing the location of the gate valve, actuator and/or coupler.

In another preferred embodiment of the fume exhausting device according to the invention, said at least one inlet opening is covered by a detachable grease filter or separator.

The method for operating a fume exhausting device explained above comprises steps of
- determining a target value for the pressure difference,
- measuring gas pressure inside the outer casing and outside the outer casing,
- calculating the pressure difference between inside of the outer casing and outside of the outer casing and
- changing the position of the at least one gate valve to adjust the measured gas pressure difference towards the target value. Preferably, the gas pressures inside the outer casing and outside the outer casing are measured continuously and the position of the at least one gate valve is changed continuously and in real-time.

An advantage of the invention is that it saves energy, because the amount of exhaust air is adjusted in real-time, whereby the amount of incoming replacement air is always minimized.

Another advantage of the invention is that it helps to achieve an even exhaust air flow over the whole covered area of the device, because the air flow through each outlet opening can be adjusted separately. Thus, the invention improves the performance of the device.

A further advantage of the invention is that the is device is easy to install, maintain and repair, because the gate valve acting as an adjusting device is located inside the outer casing easily accessible from the open chamber through the inlet opening.

A further advantage of the invention is that manufacturing cost of the device are low, because several gate valves can be operated by a single actuator. All the elements of the device are placed inside or on the outer casing, whereby the device is easy to install and the need for space is low.

### Brief Description of Drawings

In the following the invention will be described in detail, by way of examples, with reference to the accompanying drawings in which,
- Fig. 1a: depicts an embodiment of a fume exhausting device according to the invention as a front elevation,
- Fig. 1b: depicts the fume exhausting device depicted in fig. 1a as a vertical cross-section,
- Fig. 1c: depicts the fume exhausting device depicted in fig. 1a as a top elevation,
- Figs. 2a and 2b: depict the upper side of the outer casing shown in figs. 1a, 1b and 1c seen from the outlet housing.

### Detailed Description

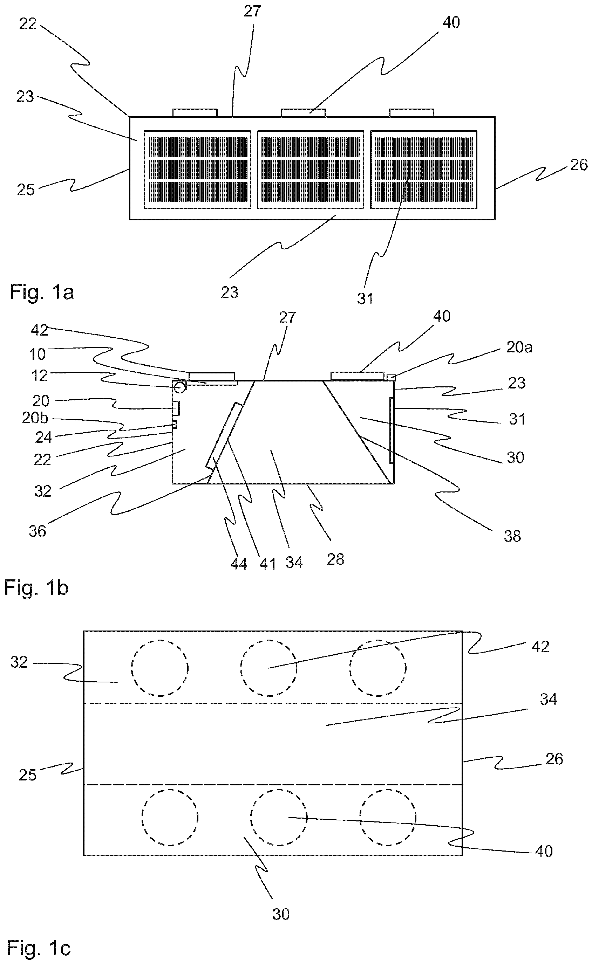

In fig. 1a an embodiment of a fume exhausting device according to the invention is shown as front elevation. In fig. 1b the fume exhausting device is shown as a cross-section in vertical direction and in 1c the same fume exhausting device is shown from above. In the following all figures are explained simultaneously.

The fume exhausting device shown in fig. 1a is an extractor hood, which is a commonly used device in commercial kitchens. The exhaust air capacity and the size of the extractor hood is dimensioned based on the size and power consumption of the kitchen appliances the hood is designed to serve. Preferably the dimensioning is made according to EN 16282 standard. The length L of the exhausting hood may be for example 1200 mm and depth D 1000 mm. The extractor hood is designed to be placed above the kitchen appliance in a way that the kitchen appliance, such as a stove, remains inside the horizontal section bordered by the outer periphery of the hood.

The extractor hood comprises a box-like outer casing 22 made of stainless steel. The casing has a front side 23, a rear side 24, first end side 25, a second end side 26 and an upper side 27. The upper side of the casing is covered and the lower side 28 of the casing is almost entirely open. Inside the casing there are two walls, first wall 36 and a second wall 38, which are in a slanted position in relation to the front and rear sides of the casing. The front side, second wall 38 and part of the upper side border an inlet housing 30 inside the casing. The upper side of the inlet housing has supply air openings 40, which are designed to be connected to the inlet channel of the ventilation system of the kitchen (not shown). Fresh incoming air flows through supply air openings inside the inlet housing. The front side is provided with louvers 31 through which incoming air can flow further inside the kitchen.

The rear side 24, first wall 36 and part of the upper side 27 border an outlet housing 32 inside the outer casing 22. The upper side of the outlet housing has outlet openings 42, which are to be connected to the outlet channel of the ventilation system of the kitchen (not shown). Between the inlet housing and outlet housing there is a chamber 34 into which vapours and fumes rise during use of the kitchen appliances. The first wall has inlet openings 41, which are covered with detachable air permeable grease filters 44. Hot vapours and fumes generated during using kitchen appliance rise into the chamber 34, flow through the filters inside the outlet housing 32 and further via outlet openings 42 and outlet channels into the atmosphere. Thus, the hot vapours and fumes exit from the device through the outlet openings.

Inside the outlet housing in connection of each outlet opening there are gate valves 10, which are configured to change effective area of the outlet openings, when the position of the gate valves in relation to outlet openings is adjusted by an actuator 12. The actuator is an electrical motor locating inside the outlet housing and attached to the upper side 27 of the outer casing.

The device further comprises a control device 20 for operating the actuator 12 and pressure measuring means for measuring gas pressure inside the outlet housing 32 and outside the outer casing 22. The pressure measuring means comprise a first pressure sensor 20a placed on the outer surface of the outer casing 22 and a second pressure sensor 20b placed inside the outlet housing 32. Alternatively, the second pressure sensor may be placed inside the chamber 34. If the premises, where the exhausting device is installed is provided with a central building automation system, the control device may be connected to this system for receiving control and steering information from the system. Alternatively, the control device may operate independently relying on the pressure measurement data and input parameters provided by the user of the device.

The rate of the exhaust air through the outlet openings is controlled by adjusting the position of the gate valves. The actuator, which is connected to the pressure sensors and to the actuator via wired or wireless data transfer means, is configured to operate the actuator based on the differences of the measured gas pressures.

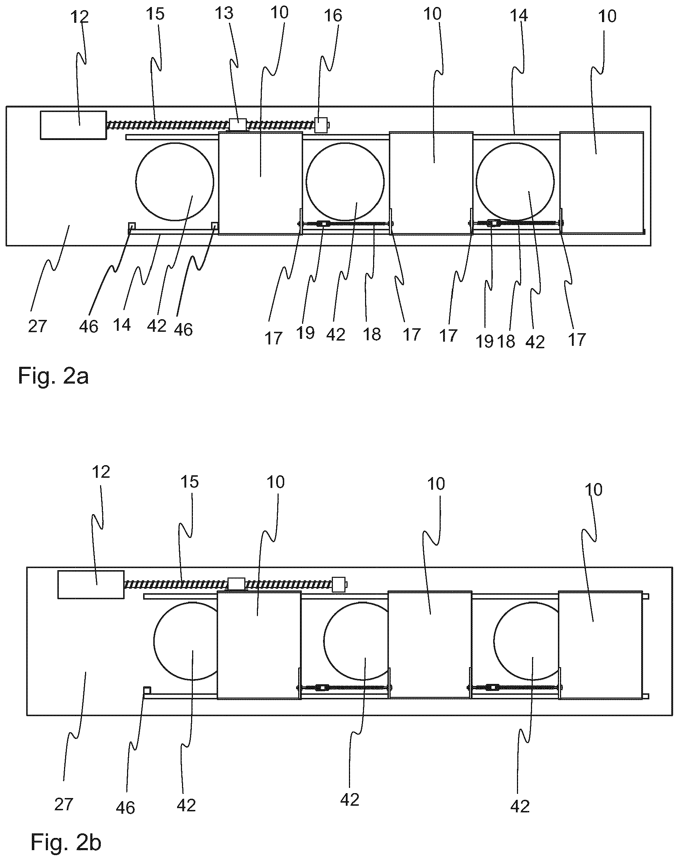

Figures 2a and 2b depict a part of the upper side of the outer casing of the fume exhausting device shown in figs. 1a, 1b and 1c seen from the outlet housing. The upper side 27 of the outlet housing has three outlet openings 42 in a row. A pair of parallel rails 14 is arranged to the upper side in a way that the outlet openings are between the rails. Three gate valves 10 are connected to the rails in a slidable manner. The gate valves are rectangular metal plates, which are connecter to a pair of rails 14 from their opposing side edges. Adjacent gate valves are connected together with a rod-like rigid coupler 18 having adjustable length. The coupler shown in figs. 2a and 2b has two threaded rods, which are connected together at their closest ends with a turnbuckle 19. The first gate valve and the second gate valve in the row of valves are connected together with a first coupler and the second gate valve and the third gate valve in the row of valves are connected together with a second coupler correspondingly. The end edges of the gate valves are provided with connection lugs 17 to which the free ends of the couplers are attached. When the turnbuckle is rotated to a first rotation direction, the length of the coupler and the distance between the gate valves increases. Correspondingly, when the turnbuckle is rotated to a second rotation direction, the length of the coupler and the distance between the gate valves decreases.

Further on the inner face of the upper side 17 of the outlet housing there is an actuator 12 in form of an electrical motor and a connector in form of a threaded rod 15. The first end of the threaded rod is connected to the electrical motor in a way that the threaded rod can be rotated by using the motor. The second end of the threaded rod is connected to a slide bearing 16 attached to the upper side of the outlet housing. Between the first and second ends of the threaded rod there is a nut 13, through which the threaded rod extends. The nut is attached to the side edge of the first gate valve of the row of the valves. When the threaded rod is rotated by operating the electrical motor, the first gate valve moves along the rails, whereby the effective area of the first outlet opening 42 of the row of the outlet openings either increases or decreases depending on the rotation direction of the threaded rod. Since the two other gate valves are connected to the first gate valve via couplers 18, they also move along the rails and the free area of the other two outlet openings either increases or decreases. Thus, the effective areas of all of the outlet openings is adjusted by operating the single actuator.

One of the rails is provided with two proximity switches 46, which are connected to the control device. The proximity switch senses the end edge of the first gate valve and defines an adjusting gap in which the end edge of the first gate can move. The control device is configured to stop the actuator when the end edge of the gate valve reaches the proximity switch. The device may have more proximity switches for sensing the position of any movable part inside the outlet housing and for defining safe moving gaps for said parts.

In figure 2a the gate valves 10 are totally outside the periphery of the outlet opening 42, where they do not have any influence to the effective area of the outlet openings. Figure 2a represents an extreme position of the gate valves, which is realized only when maximum outflow rate of the exhausting device is needed.

In fig. 2b the gate valves have been moved to a position, where they are partially above the outlet opening diminishing the effective are of the outlet opening. Because the effective area of the outlet openings is diminished, the outflow rate of the device is also reduced. In fig. 2b the effective area, i.e. the uncovered area of the outflow openings, is substantially equal in every outflow opening. However, the effective areas of the openings do not have to be equal. Instead, the effective area of each outflow opening can be adjusted individually in the installation phase of the exhausting device by adjusting the length on the couplers 18 to achieve substantially equal outflow rate through each outlet opening.

The fume exhausting device according to the invention is operated in a following manner. First, a target value for the pressure difference between space surrounding the exhausting device and the space inside the casing, preferably inside the outlet housing, is determined and saved to the control device. The target value for the pressure difference can be 0-300 Pa, preferably 50, 100, 150, 200 or 250 Pa. When the exhausting device is in operation, gas pressures inside the outer casing and outside the outer casing are measured continuously by pressure measuring means and the measured pressure data is transferred to the control device. The control device calculates the pressure difference between inside the outer casing and outside the outer casing, compares the measured pressure difference to the target pressure value and sends steering commands to the actuator to adjust the position of the gate valve, if the measured pressure difference and target value are substantially unequal. If the measured pressure difference is bigger than the target value, the outflow rate is too high and the effective areas of the outflow openings are diminished to reduce the outflow rate. Correspondingly, if the measured pressure difference is lower than the target value, the outflow rate is too low. This situation is corrected by enlarging the effective areas of the outflow openings by moving the gate valves with the actuator. In the invention the pressure measurements and adjusting the position of the gate valves is done continuously or by predetermined intervals, whereby the outflow rate is controlled and adjusted in real time. This ensures that the measured pressure difference stays close to the target value, even if the external conditions change due to changes of air pressure in the premises, structural variations in the ventilation channels, airflow through the outer walls of the building or changed weather conditions.

Some preferred embodiments of the fume exhausting device and the method for operating a fume exhausting device have been disclosed above. The invention is not limited to the solutions explained above, but the invention can be applied in different ways within the limits set by the patent claims.

| **Reference signs:** | | 34 | chamber |
|---|---|---|---|
| 10 | gate valve | 36 | first wall |
| 12 | actuator | 38 | second wall |
| 13 | nut | 40 | supply air opening |
| 14 | rail | 41 | inlet opening |
| 15 | threaded rod | 42 | outlet opening |
| 16 | slide bearing | 44 | filter |
| 17 | connection lug | 46 | proximity switch |
| 18 | coupler | | |
| 19 | turnbuckle | | |
| 20a | 1^{st} pressure sensor | | |
| 20b | 2^{nd} pressure sensor | | |
| 20 | control device | | |
| 22 | outer casing | | |
| 23 | front side | | |
| 24 | rear side | | |
| 25 | first end size | | |
| 26 | second end size | | |
| 27 | upper side | | |
| 28 | lower side | | |
| 30 | inlet housing | | |
| 31 | louver | | |
| 32 | outlet housing | | |

## Claims

1. A fume exhausting device, comprising an outer casing (22), a chamber (34) for receiving fumes and/or vapours, an outlet housing (32) inside the outer casing (22), a first wall (36) between the outlet housing (32) and the chamber (34), which first wall has at least one inlet opening (41) for conducting gas from the chamber (34) into the outlet housing (32) and at least one outlet opening (42) for exhausting gas from the outlet housing (32) out of the fume exhausting device, **characterized in that** the device further comprises at least one adjustable gate valve (10) configured to change the effective area of the least one outlet opening (42) and an at least one actuator (12) for adjusting the position of the at least one gate valve (10).

2. A fume exhausting device according to claim 1, **characterized in that** it comprises several outlet openings (42) for exhausting gas from the outlet housing (32) and several adjustable gate valves (10), each gate valve being configured to change the effective area of one outlet opening (42).

3. A fume exhausting device according to claim 2, **characterized in that** at least two gate valves (10) are connected together by a coupler (18) for simultaneously adjusting the positions of the two gate valves (10) by using one actuator (12).

4. A fume exhausting device according to claim 3, **characterized in that** the coupler (18) is a rod-like element having an adjustable length.

5. A fume exhausting device according to any of the claims 1 to 4, **characterized in that** the at least one gate valve (10) and the at least one actuator (12) are inside the outer casing (22), preferably inside the outlet housing (32).

6. A fume exhausting device according to any of the claims 1 to 5, **characterized in that** the at least one actuator (12) and the at least one adjustable gate valve (10) are connected together by a connector, such as a belt, rod or threaded rod (15), which is configured to transfer the force directed to or generated by the actuator (12) to at least one gate valve (10) for adjusting the position of the at least one gate valve (10) in relation to at least one outlet opening (42).

7. A fume exhausting device according to claim 6, **characterized in that in that** the connector is a threaded rod (15), which threaded rod (15) extends through a nut (13) attached to at least one adjustable gate valve (10) and which threaded rod (15) is configured to be rotated by using the actuator (12).

8. A fume exhausting device according to any of the claims 1 to 7, **characterized in that** said actuator (12) is a manually operated device, such as a lever or gear system, which has an operating organ extending into the chamber (34).

9. A fume exhausting device according to any of the claims 1 to 7, **characterized in that** said actuator (12) is an electrical motor locating inside the outlet housing (32) and the device further comprises a control device (20) for controlling the operation of the at least one actuator (12).

10. A fume exhausting device according to claim 9, **characterized in that** it further comprises pressure measuring means for measuring gas pressure inside the outer casing (22) and outside the outer casing (22) and the control device (20) is configured to control the operation of the least one actuator (12) based on the difference of the measured gas pressures.

11. A fume exhausting device according to claim 10, **characterized in that** said pressure measuring means comprise a first pressure sensor (20a) on the outer surface of the outer casing (22) and a second pressure sensor (20b) inside the chamber (34) or inside the outlet housing (32).

12. A fume exhausting device according to any of the claims 1 to 11, **characterized in that** it further comprises at least one proximity switch (46) for sensing the location of the gate valve (10), actuator (12) and/or coupler (18).

13. A fume exhausting device according to any of the claims 1 to 12, **characterized in that** said at least one inlet opening (41) is covered by a detachable filter (44), such as a grease filter or a separator.

14. A method for operating a fume exhausting device according to any of the claims 1 to 13, **characterized in**
- determining a target value for the pressure difference,
- measuring gas pressure inside the outer casing (22) and outside the outer casing (22),
- calculating the pressure difference between inside of the outer casing (22) and outside of the outer casing (22) and
- changing the position of the at least one gate valve (10) to adjust the measured gas pressure difference towards the target value.

15. A method according to claim 14, **characterized in that** the gas pressures inside the outer casing (22) and outside the outer casing (22) are measured continuously and the position of the at least one gate valve (10) is changed continuously and in real-time.
